# EUROPÄISCHE PATENTSCHRIFT

(11) **EP 3 236 198 B1**
(45) Veröffentlichungstag und Bekanntmachung des Hinweises auf die Patenterteilung: **10.03.2021**
(21) Anmeldenummer: 16165762.2
(22) Anmeldetag: 18.04.2016
(51) Int. Cl.: G01B 11/24, G01N 21/88

(54) **SCHALTBARE LINIENBELEUCHTUNG**
SWITCHABLE LINE ILLUMINATION
ÉCLAIRAGE EN LIGNE COMMUTABLE

(43) Veröffentlichungstag der Anmeldung: 25.10.2017
(73) Patentinhaber: VITRONIC Dr.-Ing. Stein Bildverarbeitungssysteme GmbH, 65189 Wiesbaden (DE)
(72) Erfinder: Hoffmann, Dipl.-Ing Burghard, 65232 Taunusstein (DE); Bürgel, Dr. Udo, 65201 Wiesbaden (DE)
(74) Vertreter: Müller, Thomas Michael

(56) Entgegenhaltungen:
- WO-A2-2010/003163
- DE-A1-102007 009 825
- DE-A1-102010 032 166
- DE-U1-202014 102 004
- US-A1- 2004 150 994
- US-A1- 2007 195 314

## Beschreibung

Die Erfindung betrifft eine Linienbeleuchtung nach dem Oberbegriff des Anspruchs 1.

Eine solche Linienbeleuchtung ist aus der DE 10 2010 032 166 A1 bekannt. Dort ist ein Erfassungssystem zum Erfassen von Flaschen und dergleichen Behälter beschrieben, welcher an einer Behälterwand angeordnete Merkmale aufweisen. Das Erfassungssystem weist eine Beleuchtungseinheit auf, mittels derer ein streifenförmiger Lichtstrahl auf einen Behälterwandbereich projiziert wird, wobei ein Lichtmuster auf den Behälterwandbereich projiziert wird, welches abhängig von den Oberflächeneigenschaften variabel einstellbar ist.

In der DE 10 2008 044 991 B4 wird ein Verfahren für eine derartige optische 3D-Inspektion mit Zeilenkameras und einer Leuchtanordnung mit vier Leuchten beschrieben, die jeweils zwei geringfügig unterschiedliche Wellenlängen zur Höhenmessung von Objektoberflächen aufweisen. Die einzelnen Linienleuchten sind zu verschiedenen Zeitpunkten anschaltbar, um aus vier Beleuchtungsrichtungen (Nord, Süd, Ost, West) vier verschiedene Bilder erzeugen zu können und somit aus der Information von Lichtreflexionen mittels photogrammetrischem Stereo eine höhenaufgelöste Darstellung der Objektoberfläche berechnen zu können.

In der EP 1 864 081 B1 wird eine Vorrichtung zur optischen Formerfassung von Objekten mit einer Kamera und vier Linienleuchten und einem Streukörper dargestellt. Die Vorrichtung dient ebenfalls zur Messung der Höhenauflösung einer Objektoberfläche. Hierbei handelt es sich um Beleuchtungen, die unabhängige einschaltbare Lichtquellen z. B. als LED in Gruppen aufweisen, um verschiedene Beleuchtungsmodi anwenden zu können.

Gemäß der EP 2 390 656 B1 werden bei einer optischen Glasinspektion auch vier Linienbeleuchtungen benutzt, wobei die einzelnen Lichtquellen, z. B. LEDs, einzeln, als Gruppe oder gesamt einschaltbar sind. Z. B. können hier auch Lichtquellen in Gruppen geschaltet werden.

US 2004/150994 A1 beschreibt eine dekorative Lichterkette mit vom Benutzer wählbaren Farbschemata. Die Lichterkette umfasst einer Vielzahl von adressierbaren farbsteuerbaren Rot-Grün-Blau-Leuchtdiodenknoten (LED-Knoten), die entlang der Lichterkette angeordnet sind. Eine Steuerschaltung dient dazu, die adressierbaren farbsteuerbaren RGB-LED-Knoten entlang des dekorativen Lichtstrangs mit einem anderen Farbschema einzuschalten.

Vor diesem Hintergrund ist es nun die Aufgabe der vorliegenden Erfindung, eine zu den bekannten Linienbeleuchtungen alternative Linienbeleuchtung anzugeben, die sich für den Einsatz in einer Vorrichtung für eine optische Inspektion eines Objektes mit einer Zeilenkamera eignet.

Die Aufgabe wird durch eine Linienbeleuchtung gemäß Anspruch 1 gelöst, wobei sich beispielhafte Ausführungen aus den abhängigen Ansprüchen ergeben.

Die Linienbeleuchtung ist so angeordnet, dass mehrere Gruppen von Lichtquellen oder einzelne Lichtquellen unabhängig voneinander ein- und ausschaltbar sind. Hierbei handelt es sich um eine erste Gruppe A, wobei beispielsweise eine ungerade Nummerierung der Lichtquellen (1., 3., 5., ...) schaltbar ist und eine zweite Gruppe B mit einer geraden Nummerierung der Lichtquellen (2., 4., 6., ...), die jeweils abwechselnd als Gruppe schaltbar ist. Die Lichtquellen der Gruppen A und B unterscheiden sich in ihrer Abstrahlrichtung.

Weiterhin können die Lichtquellen so angeordnet sein, dass die Lichtquellen aus Gruppe A und Gruppe B ineinander verkämmt angeordnet sind.

Dabei sind die Lichtquellen auf einer Platine in einer Reihe angeordnet, wobei sich die Platine mit den Lichtquellen in einem Gehäuse befindet. Als Lichtquellen werden vorzugsweise LEDs (Light Emitting Diode) eingesetzt.

Der Vorteil liegt darin, dass die Lichtquellen einheitlich in der Reihe verkämmt angeordnet sind, dennoch aber zwei verschiedene Abstrahlrichtungen realisiert sind. So ist die Anordnung nicht nur platzsparend in einem Gehäuse installierbar, die Ausführung ist auch kostengünstiger herstellbar.

Weiterhin können optische Elemente im Strahlengang nach den Lichtquellen eingesetzt werden, bevorzugt um die Lichtstrahlen zu bündeln und ggf. die Lichtstrahlen in eine gewünschte Richtung abzulenken, so dass ein einheitlich heller Streifen projiziert werden kann. Zum Beispiel kann eine Fresnel-Linse als lichtbündelndes Element eingesetzt werden, so dass die Lichtstrahlen nahezu parallel verlaufen.

Ein Anwendungsbeispiel stellt eine Vorrichtung mit zwei der beschriebenen Linienbeleuchtungen für eine optische Inspektion von Objektoberflächen (z. B. von Bauteilen) dar. Hintergrund ist der folgende:
In der industriellen Fertigung müssen strenge Vorgaben von einzelnen Bauteilen eingehalten werden. Eine weitere Verarbeitung von technischen Mitteln wie Geräten, Gehäusen etc. oder der Bau von Fahrzeugen ist nur sinnvoll, wenn jedes einzelne Bauteil als verarbeitungstauglich klassifiziert wird. Daher ist eine automatische optische Prüfeinrichtung von Objekten von Vorteil.

Eine solche optische Prüfeinheit wird im Folgenden beschrieben:
Hierbei werden Bildaufnahmen eines Objekts (zum Beispiel ein mechanisches Bauteil) mit einer Kamera aufgenommen. Bevorzugt wird als Kamera eine Zeilenkamera eingesetzt, wobei hiermit Bildzeilen aufgenommen werden. Die einzelnen Zeilen werden anschließend in einer Bildverarbeitungseinheit zu einer Bildaufnahme zusammengefügt. Die Bildaufnahmen werden danach durch eine Bildverarbeitungs-und Auswerteeinheit auf Risse, Dellen oder andere Unebenheiten überprüft.

Eine Möglichkeit, die Bildaufnahmen der Objektoberflächen zu prüfen, ist das Verfahren des photogrammetrischen Stereos, bei dem aus typischerweise vier verschiedenen Richtungen (Nord, Süd, Ost, West) Licht auf das Objekt eintrifft. Durch die Licht/Schatten-Verhältnisse bzw. durch unterschiedliche Lichtreflexionsintensitäten in den vier Bildaufnahmen kann mit diesem Verfahren eine höhenaufgelöste Darstellung der Objektoberfläche erzeugt werden. Es können vier Linienbeleuchtungen eingesetzt werden, die aus vier verschiedenen Richtungen die Lichtstrahlen emittieren. Vorteilhafter ist es jedoch, zwei Linienbeleuchtungen einzusetzen, wobei jede der beiden Linienbeleuchtungen zwei verschiedene Lichtstrahlcharakteristiken aufweist, so dass das Licht der Lichtquellen in zwei verschiedenen Richtungen abgelenkt wird. Hierbei sind beide Linienbeleuchtungen schaltbar; es können jeweils verschiedene Lichtquellen getrennt an- und abgeschaltet werden.

Die Erfindung wird nachfolgend beispielhaft näher erläutert. Hierbei zeigt:
- Fig. 1: eine erste Anordnung von LEDs einer Linienbeleuchtung in Gruppen mit optischem Element,
- Fig. 2: eine zweite Anordnung von LEDs einer Linienbeleuchtung in Gruppen mit optischem Element, und
- Fig. 3: eine Vorrichtung für eine optische Inspektion eines Objektes mit einer Zeilenkamera und zwei Linienbeleuchtungseinheiten.

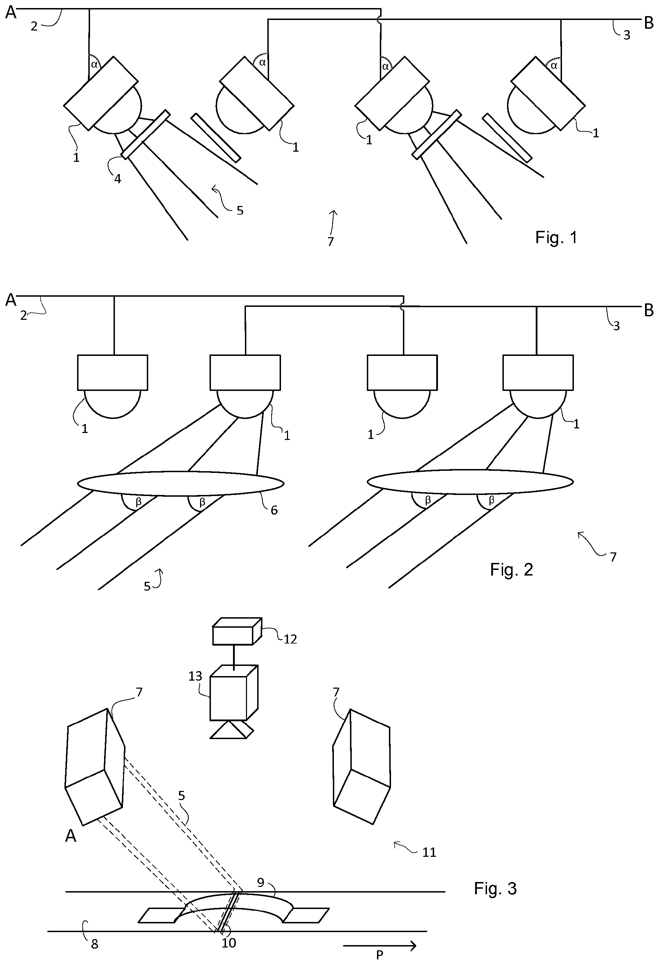

Fig. 1 zeigt vier LEDs (1) in einer Reihe nebeneinander angeordnet, wobei jeweils die erste LED von links und die dritte LED von links der Gruppe A (2) zugeordnet sind und die zweite und vierte LED von links der Gruppe B (3) zugeordnet sind. Gruppe A und Gruppe B sind jeweils mit einer Steuereinheit separat an- und abschaltbar. In diesem Beispiel sind die LEDs der Gruppe A eingeschaltet (erkennbar an den Lichtstrahlen (5)), die LEDs der Gruppe B sind ausgeschaltet.

In Fig. 1 ist die Anordnung der LEDs (1) in zwei Gruppen (A, B) gezeigt. Die erste Gruppe (A) besteht aus der ersten und der dritten LED von links, die zweite Gruppe (B) besteht aus der zweiten und der vierten LED von links. Hierbei ist erkennbar, dass die erste und die zweite LED, sowie die dritte und vierte LED aus der Gruppe A und Gruppe B ineinander verkämmt angeordnet sind. Die LEDs der Gruppe A sind in einem Winkel α von 5° bis 60° nach innen bzw. nach rechts ausgerichtet, wobei in diesem Beispiel die bevorzugte Ausrichtung in einem Winkel α von ca. 35°-50° erfolgt. Die LEDs der Gruppe B sind wie die LEDs der Gruppe A ebenfalls in einem Winkel α von 5°-60° ausgerichtet, jedoch nach innen bzw. nach links. Alle LEDs einer Gruppe sind im betragsmäßig gleichen Winkel α ausgerichtet.

Um die Lichtstrahlen zu bündeln und damit eine effiziente Ausleuchtung von gewünschten Bereichen zu ermöglichen, ist in diesem Beispiel jeder LED ein optisches Element (4) zugeordnet. Das jeweilige optische Element (4) ist im gleichen Winkel α wie die jeweilige LED ausgerichtet. Als Beispiel für ein solches optisches Element (4) kann eine Fresnel-Linse als lichtbündelndes optisches Element gewählt werden.

In Fig. 2 ist eine weitere Anordnung der Linienbeleuchtung gezeigt. Hier sind die LEDs (1) in einer Ebene gerade z.B. auf einer Leiterplatte in Gruppen angeordnet. Als Beispiel sind hier die LEDs der Gruppe B (3) eingeschaltet. Anders als in der Beispielanordnung aus Fig. 1 ist hier jeweils zwei LEDs (je eine LED aus Gruppe A und Gruppe B) ein optisches Element (6) zugeordnet, um die Lichtstrahlen zu bündeln. Zu erkennen ist eine Linse, wobei die einfallenden Lichtstrahlen in einem Winkel β im Bereich von 5°-60° abgelenkt werden: Strömen Lichtstrahlen der LEDs (1) aus einer Richtung in die Linse ein, werden die Lichtstrahlen in eine gewünschte andere Richtung gebündelt abgelenkt. Als optisches Element (6) kann eine Fresnel-Linse gewählt werden.

Fig. 3 zeigt eine Vorrichtung zur optischen Inspektion eines Objekts (9). Das Objekt (9) kann zum Beispiel ein mechanisches Bauteil sein, das auf Risse, Löcher, Dellen oder andere Störungsfaktoren geprüft wird. Das Objekt (9) wird auf einem Förderband (8) in Pfeilrichtung P bewegt. Wird das Objekt (9) auf bestimmten vorgesehenen Positionen unter einer Kamera (13) platziert, kann das Objekt (9) durch die Kamera (13) und verschiedenen Beleuchtungsszenarien überprüft werden.

In Fig. 3 ist eine Anordnung der Kamera (13), bevorzugt eine Zeilenkamera, oberhalb des Förderbandes (8) dargestellt. Hierbei liegt der schmale Aufnahmebereich (10) der Zeilenkamera quer zum Förderband (8) über dem Objekt (9). Die Vorrichtung weist mit zwei Linienbeleuchtungen (7), jeweils links oberhalb und rechts oberhalb des Objekts (9) quer zum Förderband (8) insgesamt vier verschiedene Beleuchtungsmodi auf. Hierbei beleuchten die Linienbeleuchtungen (7) aus vier verschieden Richtungen (Nord, Süd, Ost, West) jeweils zeitlich nacheinander das Objekt (9). In Fig. 3 ist die Beleuchtung (5) aus der "nordwestlichen" Richtung gezeigt, wobei die linke Linienbeleuchtung (7) im Modus A geschaltet ist.

Nacheinander werden so Bildaufnahmen aus vier verschiedenen Beleuchtungsrichtungen (7) aufgenommen. Danach bewegt sich das Objekt (9) auf dem Förderband (8) in Pfeilrichtung P weiter. Auf den finalen Bildaufnahmen kann später mit der Bildverarbeitungs- und Auswerteeinheit (12) zum Beispiel eine Höhenauflösung aus der Information von Licht und Schatten bzw. aus den Lichtreflexionen aus verschiedenen Richtungen der Objektoberfläche mittels photogrammetrischen Stereos errechnet werden.

### Bezugszeichenliste

- 1: Lichtquelle
- 2: Gruppe A
- 3: Gruppe B
- 4: Optisches Element I
- 5: Lichtstrahlen
- 6: Optisches Element II
- 7: Beleuchtungseinheit/Linienleuchte
- 8: Förderband
- 9: Objekt
- 10: Aufnahmebereich der Kamera
- 11: Vorrichtung eines optischen Inspektionssystems
- 12: Auswerteeinheit
- 13: Kamera

- A: Betriebsmodus "A"
- P: Pfeilrichtung

## Patentansprüche

1. Linienbeleuchtung (7) mit Lichtquellen (1), die in einer Reihe angeordnet sind, wobei die Lichtquellen (1) in mindestens zwei Gruppen (A, B) angeordnet sind, die voneinander unabhängig schaltbar sind,
**dadurch gekennzeichnet,**
**dass** alle Lichtquellen (1) einer Gruppe den gleichen Winkel (α, β) ihrer Abstrahlrichtung aufweisen und
**dass** sich die Lichtquellen (1) der mindestens zwei Gruppen (A, B) im Winkel (α, β) ihrer Abstrahlrichtung unterscheiden.

2. Linienbeleuchtung (7) nach Anspruch 1, **dadurch gekennzeichnet, dass** die Lichtquellen (1) von mindestens zwei der Gruppen (A, B) zumindest in Teilen überlappend verkämmt angeordnet sind.

3. Linienbeleuchtung (7) nach einem der vorhergehenden Ansprüchen, **dadurch gekennzeichnet, dass** sich die in Reihe und Gruppen angeordneten Lichtquellen (1) in einem Gehäuse befinden.

4. Linienbeleuchtung (7) nach einem der vorhergehenden Ansprüchen, **dadurch gekennzeichnet, dass** Lichtquellen (1) unterschiedlicher Gruppen auf einer gemeinsamen Leiterplatte angeordnet sind.

5. Linienbeleuchtung (7) nach einem der vorhergehenden Ansprüchen, **dadurch gekennzeichnet, dass** im Strahlengang hinter den Lichtquellen (1) mindestens ein strahlenbündelndes optisches Element (4, 6) angeordnet ist.

6. Linienbeleuchtung (7) nach einem der vorhergehenden Ansprüchen, **dadurch gekennzeichnet, dass** das mindestens eine strahlenbündelnde optische Element (4, 6) eine Fresnel-Linse ist.

7. Linienbeleuchtung (7) nach einem der vorhergehenden Ansprüchen, **dadurch gekennzeichnet, dass** das mindestens eine strahlenbündelnde optische Element (4, 6) eine Zylinderlinse ist.

8. Linienbeleuchtung (7) nach einem der vorhergehenden Ansprüchen, **dadurch gekennzeichnet, dass** die Lichtquellen (1) LEDs sind.

## Claims

1. Line illumination (7) with light sources (1) arranged in a row, wherein the light sources (1) are arranged in at least two groups (A, B) which can be switched independently of one another,
**characterized in**
**that** all light sources (1) of a group have the same angle (α, β) of their radiation direction and
**that** the light sources (1) of the at least two groups (A, B) differ in the angle (α, β) of their radiation direction.

2. Line illumination (7) according to claim 1, **characterized in that** the light sources (1) of at least two of the groups (A, B) are arranged to overlap in a cogged manner at least in parts.

3. Line illumination (7) according to any one of the preceding claims, **characterized in that** the light sources (1) arranged in a row and groups are located in a housing.

4. Line illumination (7) according to one of the preceding claims, **characterized in that** light sources (1) of different groups are arranged on a common printed circuit board.

5. Line illumination (7) according to one of the preceding claims, **characterized in that** at least one beam-focusing optical element (4, 6) is arranged in the beam path behind the light sources (1).

6. Line illumination (7) according to any one of the preceding claims, **characterized in that** the at least one beam-focusing optical element (4, 6) is a Fresnel lens.

7. Line illumination (7) according to any one of the preceding claims, **characterized in that** the at least one beam-focusing optical element (4, 6) is a cylindrical lens.

8. Line illumination (7) according to any one of the preceding claims, **characterized in that** the light sources (1) are LEDs.

## Revendications

1. Éclairage en ligne (7) doté de sources lumineuses (1), qui sont disposées sur une rangée, les sources lumineuses (1) étant disposées en au moins deux groupes (A, B), qui sont commutables indépendamment l'un de l'autre,
**caractérisé en ce que**
toutes les sources lumineuses (1) d'un groupe présentent le même angle (α, β) dans leur direction d'émission
**en ce que** les sources lumineuses (1) des au moins deux groupes (A, B) se différencient par l'angle (α, β) de leur direction d'émission.

2. Éclairage en ligne (7) selon la revendication 1, **caractérisé en ce que** les sources lumineuses (1) d'au moins deux des groupes (A, B) sont disposées en étant imbriquées en se chevauchant dans au moins des parties.

3. Éclairage en ligne (7) selon l'une quelconque des revendications précédentes, **caractérisé en ce que** les sources lumineuses (1) disposées en rangées et en groupes se trouvent dans un boîtier.

4. Éclairage en ligne (7) selon l'une quelconque des revendications précédentes, **caractérisé en ce que** des sources lumineuses (1) de différents groupes sont disposées sur une carte de circuit imprimé commune.

5. Éclairage en ligne (7) selon l'une quelconque des revendications précédentes, **caractérisé en ce que** dans la trajectoire du faisceau derrière les sources lumineuses (1) est disposé au moins un élément optique (4, 6) concentrateur de rayons.

6. Éclairage en ligne (7) selon l'une quelconque des revendications précédentes, **caractérisé en ce que** l'au moins un élément optique (4, 6) concentrateur de rayons est une lentille de Fresnel.

7. Éclairage en ligne (7) selon l'une quelconque des revendications précédentes, **caractérisé en ce que** l'au moins un élément optique (4, 6) est une lentille cylindrique.

8. Éclairage en ligne (7) selon l'une quelconque des revendications précédentes, **caractérisé en ce que** les sources lumineuses (1) sont des LEDS.
